Europäisches Patentamt

European Patent Office

Office européen des brevets

(19)

(11) Publication number: **0 443 706 B1**

(12) **EUROPEAN PATENT SPECIFICATION**

(45) Date of publication of patent specification: **27.12.95**  (51) Int. Cl.6: **A63B 37/12**, C08L 23/08, //(C08L23/08,23:08)

(21) Application number: **91300146.7**

(22) Date of filing: **09.01.91**

(54) **Golf ball**

(30) Priority: **10.01.90 JP 3803/90**

(43) Date of publication of application:
**28.08.91 Bulletin 91/35**

(45) Publication of the grant of the patent:
**27.12.95 Bulletin 95/52**

(84) Designated Contracting States:
**DE FR GB**

(56) References cited:
**EP-A- 0 407 049**     **FR-A- 2 637 810**
**GB-A- 2 144 130**     **US-A- 3 819 768**
**US-A- 4 323 247**     **US-A- 4 911 451**

**WORLD PATENTS INDEX LATEST Week 8844, Derwent Publications Ltd., London, GB; AN 88-311474 & JP-A-63 229 077 ( SUMITOMO RUBBER ) 22 September1988**

(73) Proprietor: **SUMITOMO RUBBER INDUSTRIES LIMITED**
**No. 1-1, Tsutsui-cho 1-chome**
**Chuo-ku**
**Kobe-shi**
**Hyogo 651 (JP)**

(72) Inventor: **Yamada, Mikio**
**1-5-26-706, Tsukimiyamahonmachi,**
**Suma-ku**
**Kobe-shi,**
**Hyogo (JP)**

(74) Representative: **Allard, Susan Joyce et al**
**BOULT, WADE & TENNANT**
**27 Furnival Street**
**London EC4A 1PO (GB)**

## Description

The present invention relates to a golf ball. More particularly, it relates to a golf ball which comprises a core and a specific ethylene-acrylic acid copolymer type ionomer resin covering the core, the said ball having a superior velocity, excellent flight properties and good low temperature durability.

Before the early nineteen eighties, golf balls generally were thread wound golf balls which comprised a thread wound core and a balata cover, which mainly contains transpolyisoprene, covering the core. In the late nineteen eighties, a solid core was developed instead of the thread wound core and was covered with an ionomer resin of an ethylene-methacrylic acid copolymer commercially available from DuPont Company, instead of the balata cover, to form a two piece golf ball. This two piece construction has been employed to the present time.

Two piece golf balls have become very popular among most amateur golfers while the thread wound golf balls covered by the balata cover are regularly used only by skilled amateur golfers or professional golfers. This is because the ionomer resin has a high cut resistance and is cheap, in comparison with the balata resin. The ionomer resin is commercially available from the DuPont Company as SURLYN and in Japan available from Mitsui DuPont Polychemical Co., Ltd. as HI-MILAN.

The ionomer resin which is used as the cover of golf balls, however, is generally an ethylene-methacrylic acid copolymer. No golf balls of which the cover is an ethylene-acrylic acid copolymer have ever been made and been commercially available. For example, US-A-3,819,768 and Japanese Kokai Publication 119766/1982 suggest that a golf ball cover is formed from an ionomer resin, but the ionomer resins are SURLYN (or HI-MILAN), i.e. the ethylene-methacrylic acid copolymer.

Two piece golf balls of which the cover resin is the ethylene-methacrylic acid copolymer are still desired to improve ball velocity, flight distance and shot feel when the ball hit. Especially, the flight distance and ball velocity are the properties which it is most desired to improve, because every golfer wishes to increase the flight distance.

US-A-3819768 relates to golf balls having cover compositions which result in balls having superior cold cracking properties, superior coefficients of restitution, superior durability and better aging characteristics. The cover compositions comprise mixtures of ionic copolymers of olefins and unsaturated monocarboxylic acid salts, such as a mixture of sodium and zinc salts of said copolymers.

US-A-4323247 relates to an improved cover for golf balls which imparts to the ball both a high initial velocity and exceptional durability. The cover is composed of at least three ionic resins.

JP-A-63229077 relates to a golf ball consisting of a core and a cover of a resin based on a copolymer-type ionomer of an alpha-olefin and an alpha, beta-ethylenic unsaturated mono-carboxylic acid.

The present invention thus relates to a golf ball which has an excellent ball velocity, flight distance and low-temperature durability, by using an ionomer resin of an ethylene-acrylic acid copolymer as the cover resin.

Accordingly, the present invention comprises a golf ball comprising a core and a cover covering the core, the cover having a total neutralization degree of 30 to 60%, of which at least 10% is neutralized with divalent metal ions, and being prepared by mixing with divalent metal ions, and being prepared by mixing

(A) an ionomer resin having a melt index of 0.5 to 5.0 g/10 min and a stiffness modulus of 3,000 to 5,000 $Kg/cm^2$, prepared from an ethylene-acrylic acid copolymer of 16 to 25% by weight of acrylic acid and the balance of ethylene of which 20 to 70 mol % of the carboxyl groups is neutralized with alkali metal ions, and the ethylene-acrylic acid copolymer before neutralization having a melt index of 20 to 150 g/10 min, and

(B) an ionomer resin having a melt index of 0.5 to 5.0 g/10 min and a stiffness modulus of 2,000 to 4,500 $Kg/cm^2$, prepared from an ethylene-acrylic acid copolymer of which 25 to 70 mol % of the carboxyl groups is neutralised with divalent metal ions, and the ethylene-acrylic acid copolymer before neutralization having a melt index of 20 to 150 g/10 min,

in a weight ratio (A/B) of 70/30 to 40/60.

By the term "an ethylene-acrylic acid copolymer" as used herein is meant a copolymer of 16 to 25% by weight of acrylic acid and the balance of ethylene.

First of all, the developing process of the present invention is explained. Ionomer resins are known as a copolymer of an alpha-olefin, an alpha, beta-ethylenically unsaturated carboxylic acid, an alpha, beta-ethylenically unsaturated carboxylic metal salt and optionally an alpha, betaethylenically unsaturated carboxylic ester, and various kinds of ionomer resins are commercially available. However, for use as the cover of golf balls, only the ionomer resin of the ethylene-methacrylic acid has been used. The present inventors have found that an ethylene-acrylic acid type ionomer resin can be used for the cover resin of the golf ball if its acid content, selection of neutralizing metals and neutralization degree are specified. The golf balls using such cover resins have excellent flight properties, i.e. superior ball velocity, but have drawbacks in low-temperature durability. In order to improve the low-temperature durability, it has been found that two specific ethylene-acrylic acid type ionomer resins which are further limited by melt index, stiffness modulus etc. are blended together. The golf balls of which the cover is blended surprisingly have excellent flight properties, i.e. superior ball velocity, and also improved low-temperature durability. Japanese Kokai Publication 268779/1990 corresponding to US-A-4,991,451 discloses that a blend of two ethylene-acrylic acid type copolymers, one of which is neutralized with sodium ions and the other is neutralized with zinc ions, may be used as a cover resin of golf balls. The reference does not however teach the limitation of melt index and stiffness modulus of each ionomer resin and the neutralization degree of the resin blend. The limitations of the present invention provide those skilled in the art with a guideline as to how the resins for blending are selected to obtain golf ball having highly improved properties.

The cover of the present invention is a mixture of the ethylene-acrylic acid copolymer in which the carboxylic acid groups are neutralized with alkali metal ions, i.e. ionomer resin (A), with the ethylene-acrylic acid copolymer in which the carboxylic acid groups are neutralized with divalent metal ions, i.e. ionomer resin (B). The alkali metal for neutralization includes lithium, sodium and potassium but preferred are lithium and sodium. The divalent metal for neutralization includes zinc, copper and an alkaline earth metal (e.g. magnesium or calcium).

The base ethylene-acrylic acid copolymer of the ionomer resins has an acrylic acid content of 16 to 25% by weight and a melt index of 20 to 150 g/10 min. If the acrylic acid content is less than 10% by weight, the stiffness modulus and cut resistance are poor. If the acrylic acid content is more than 25% by weight, the stiffness modulus is too high, thus resulting in a deterioration of the shot feel when the ball is hit and the durability after hitting many times. If the melt index is less than 20 g/10 min, the moulding properties are poor. If the melt index is more than 150 g/10 min, the molecular weight is reduced and the rebound resilience is poor. The base copolymer may be the same or different for the ionomer resins (A) and (B). It is preferred that the copolymer is the same for the two ionomer resins (A) and (B), because the mixture of the resins so obtained has good properties.

The ionomer resin (A) has a neutralization degree of 20 to 70%, preferably 30 to 60%, a melt index of 0.5 to 5.0 g/10 min and a stiffness modulus of 3,000 to 5,000 Kg/cm$^2$. Neutralization degrees of less than 20% reduce ball velocity and those of more than 70% reduce the moulding properties. Stiffness modulus values of less than 3,000 Kg/cm$^2$ reduce ball velocity.

The ionomer resin (B) has a neutralization degree of 25 to 70%, preferably 35 to 60%, a melt index of 0.5 to 5.0 g/10 min and a stiffness modulus of 2,000 to 4,500 Kg/cm$^2$. If the neutralization degree is less than 25%, the ball velocity is poor and the low-temperature duralibility also is poor. If the neutralization degree is more than 70%, the moulding properties and ambient-temperature durability are reduced. Stiffness modulus values of less than 1,500 Kg/cm$^2$ reduce ball velocity.

The cover resin of the present invention invention is a mixture of the ionomer resins (A) and (B). The weight ratio (A/B) of the mixture is within the range of 70/30 to 40/60. If the ionomer resin (B) is less than 20% by weight of the mixture, the low-temperature durability is not sufficiently improved. If the ionomer resin (B) is more than 70% by weight, the ball velocity is reduced. It is required that the ionomer resin mixture has a total neutralization degree of 30 to 60%. Values of less than 30% reduce the ball velocity and those of more than 60% reduce the moulding properties. It is also required that at least 10% of the total neutralization degree is neutralized with the divalent metal ions. If it is less than 10%, the low temperature durability is poor.

The neutralization is generally carried out by reacting the base copolymer with a corresponding metal (i.e. an alkali metal or divalent metal) reacting the base copolymer with a corresponding metal (i.e. an alkali metal or divalent metal) compound, such as a hydroxide, acetate or carbonate. For example, the metal compound and the base ethylene-acrylic acid copolymer may be mixed in an extruder at a temperature of 200 to 250°C.

The cover resin of the present invention is a mixture of the ionomer resins (A) and (B), but other resins, such as an ethylene-methacrylic type ionomer resin, polyolefin, polyester elastomer or polyamide may be added thereto within the range that the properties of the cover resin are not deteriorated. The amount of the other resins is preferably limited to less than 20% by weight. The cover resin may also contain a pigment, a filler for controlling the specific weight of the golf ball, a dispersant, an antioxidant, a ultraviolet absorber or a light stabilizer.

The golf ball core to be covered by the cover resin may be either a solid core which is solidly moulded from rubber, or a thread-wound core which is prepared by winding rubber thread onto a centre. The solid core may be prepared from a rubber composition which comprises 100 parts by weight of a polybutadiene rubber, 10 to 50 parts by weight of a crosslinking agent (e.g. an alpha, beta-monoethylenically carboxylic

3

acid, such as acrylic acid or methacrylic acid, or a salt thereof or a functional monomer, such as trimethylolpropane trimethyacrylate), 10 to 30 parts by weight of a filler (e.g. zinc acetate or barium sulfate), 0.5 to 5.0 parts by weight of a peroxide (e.g. dicumylperoxide), 0.1 to 1.0 of an antioxidant. The rubber composition may be press-vulcanized at a temperature of 140 to 170°C for 10 to 40 minutes to form a spherical solid core. The thread rubber for the thread-wound core is not limited, for example prepared by vulcanizing a rubber composition containing natural rubber (or a combination of natural rubber and a synthetic polyisoprene), an antioxidant, a vulcanization promoter, sulfur and the like. The centre for the thread-wound core may be either a liquid type or rubber type. The rubber type centre may be prepared from the same rubber composition as the solid core. The above core and centre are included by way of exemplification but are not limited thereto.

The golf ball of the present invention may be prepared by covering a golf ball core with the cover resin. The covering method may be any of the methods used in this field, for example injection moulding.

EXAMPLES

The present invention is illustrated with the following examples which, however, are not to the construed as limiting the present invention to their details.

Examples 1 to 7 and Comparative Examples 1 to 8

Preparation of a solid core

A rubber composition was prepared by mixing 100 parts by weight of cis-1,4-polybutadiene (available from Japan Synthetic Rubber Co., Ltd. as JSR BR01), 30 parts by weight of zinc acrylate (available from Nippon Shokubai Kagaku Kogyo Co., Ltd.), 20 parts by weight of zinc oxide (available from Toho Zinc Co., Ltd.) and 1 part by weight of dicumyl peroxide (available from Nippon Oil and Fat Co., Ltd.). The composition was vulcanized at 150 °C for 30 minutes to form a solid core having an average diameter of about 38.5 mm.

Preparation of cover resins

(a) EAA-Na (neutralization degree 42 %)

A master batch was prepared by mixing an ethylene-acrylic acid copolymer (available from Exxon Company as EX-248 which had an acrylic acid content of about 16 wt % and a melt index of 50 g/10 min) and sodium carbonate ($Na_2CO_3 \cdot H_2O$) in a weight ratio of 50/50 by a twin roll to form a sheet which was then ground. Next, 100 parts by weight of the same ethylene-acrylic acid copolymer was extruded with 12 parts by weight of the master batch using a biaxial extruder.

Extruding conditions were a screw diameter of 45 mm, a screw rotating rate of 50 rpm and a screw L/D of 30. The cylinder temperature condition were as follow;

```
Barrel     1   2   3   4   5   6   7   Die

Temp.(°C) 200 200 200 230 250 250 250  250

Extruding rate: 15 Kg/hour
```

The extruded resin was transparent and analyzed by a Fourier transform infrared spectrometer (available from Shimadzu Corp. as FT.IR-4200) to find that an absorption at 1,700 cm$^{-1}$ (-COOH) disappeared and a new absorption peak at 1,560 cm$^{-1}$ (-COONa) appeared. The infrared spectrum showed that the ionization was accomplished. A concentration of sodium ions was determined by an atomic-absorption spectroscopy to find 2.1 % by weight, thus completely reacting of the sodium carbonate. An apparatus for the atomic-absorption spectroscopy is a polar Zeeman atomic-absorption spectrometer 180-80 type available from Hitachi, Ltd.

4

(b) EAA-Na (neutralization degree 44 %)

The ionomer resin was prepared as generally described in (a), with the exception that an ethylene-acrylic acid copolymer (available from Exxon Company as EX-526 which had an acrylic acid content of about 18% by weight and a melt index of 120 g/10 min) was employed. The obtained resin had a sodium content of 2.5 % by weight.

(c) EAA-Na (neutralization degree 20 %)

The ionomer resin was prepared as generally described in (a), with the exception that an ethylene-acrylic acid copolymer (available from Mitsubishi Petrochemical Co. Ltd. as Yukaron AW-500 which had an acrylic acid content of 20 % by weight and a melt index of 300 g/10 min) was employed. The obtained resin had a sodium content of 1.3 % by weight.

(d) EAA-Na (neutralization degree 40 %)

The ionomer resin was prepared as generally described in (a), with the exception that an ethylene-acrylic acid copolymer (available from Dow Chemical Company as EAA 459 which had an acrylic acid content of 8 % by weight and a melt index of 9 g/10 min) was employed. The obtained resin had a sodium content of 1.0 % by weight.

(e) EAA-Li (neutralization degree 30 %)

The ionomer resin was prepared as generally described in (a), with the exception that lithium hydroxide was employed instead of sodium carbonate. The obtained resin had a lithium content of 0.45 % by weight.

(f) EAA-Zn (neutralization degree 35 %)

A master batch was prepared by mixing the same ethylene-acrylic acid copolymer as (a), 50 % by weight of zinc oxide and 1.5 % by weight of zinc acetate by a twin roll to form a sheet which was then ground. Next, 100 parts by weight of the same ethylene-acrylic acid copolymer was extruded with 6 parts by weight of the master batch using a biaxial extruder.

The extruded resin was transparent and analyzed by a Fourier transform infrared spectrometer to find that zinc oxide was completely reacted. A concentration of zinc ions was determined by ICP emission spectroscopic analysis using an apparatus (available from Seiko Electronic Co., Ltd. as ICP SPS1100) to find about 2.5 % by weight.

(g) EAA-Zn (neutralization degree 27 %)

The ionomer resin was prepared as generally described in (f), using the same ethylene-acrylic acid copolymer. The obtained resin had a zinc content of 1.9 % by weight.

(h) EAA-Zn (neutralization degree 22 %)

The ionomer resin was prepared as generally described in (f), using the same ethylene-acrylic acid copolymer. The obtained resin had a zinc content of about 1.6 % by weight.

(i) EAA-Mg (neutralization degree 35 %)

A master batch was prepared by mixing the same ethylene-acrylic acid copolymer as (f) and magnesium hydroxide in a weight ratio of 50/50 by a twin roll to form a sheet which was then ground. Next, 100 parts by weight of the same ethylene-acrylic acid copolymer was extruded with 3.2 parts by weight of the master batch using a biaxial extruder.

The extruded resin was transparent and analyzed by a Fourier transform infrared spectrometer to find that a new absorption peak at 1,590 $cm^{-1}$ appeared. The infrared spectrum showed that ionization was completely accomplished. A concentration of sodium ions was determined by an atomic-absorption spectroscopy to find about 0.95% by weight.

(j) EMAA-Na (neutralization degree 30 %)

An ionomer resin available from Mitsui DuPont Polychemicals Co., Ltd. as Hi-Milan 1605, having a methacrylic acid content of 15 % by weight.

(k) EMAA-Zn (neutralization degree 60 %)

An ionomer resin available from Mitsui DuPont Polychemicals Co., Ltd. as Hi-Milan 1706, having a methacrylic acid content of 15 % by weight.

(l) EMAA-Na (neutralization degree 60 %)

An ionomer resin available from Mitsui DuPont Polychemicals Co., Ltd. as Hi-Milan 1707 having a methacrylic acid content of 15 % by weight.

If the resins (a) to (i) were not turned to transparent by the first extruding, extruding was conducted two times to completely react.

The ionomer resins (a) to (l) were blended by the weight ratio described in Tables 1 to 3 and then mixed with 2 parts by weight of tithanium oxide ($TiO_2$) by an extruder to form a cover composition.

The above obtained core was covered with the cover resin mixture by injection molding to form a two piece golf ball. The ball was coated with a paint to obtain a glf ball having a diameter of 42.8 mm. The obtained golf ball was evaluated by ball weight, compression, initial velocity, durability, low-temperature durability, flying distance (carry), stiffness modulus of cover and melt index of cover and the results are shown in Tables 2 and 3.

In Table 1, the difference of physical properties between the ethylene-acrylic acid copolymer type ionomer resin and the ethylene-methacrylic acid copolymer type ionomer resin is shown. Table 1 also shows the effects of blending the ethylene-acrylic acid copolymer type ionomer resin. In table 1, the amount of resin is based on parts by weight.

EP 0 443 706 B1

Table 1

| Resin name   (Neutralization degree) | Sample No. | | | | | |
|---|---|---|---|---|---|---|
| | 1 | 2 | 3 | 4 | 5 | 6 |
| (a) EAA-Na    (about 42 %) | 50 | 100 | - | - | - | - |
| (f) EAA-Zn    (about 35 %) | 50 | - | 100 | - | - | - |
| (k) EMAA-Zn   (about 60 %) | - | - | - | 50 | 100 | - |
| (1) EMAA-Na   (about 60 %) | - | - | - | 50 | - | 100 |
| Ball weight (g) | 45.1 | 45.3 | 45.2 | 45.3 | 45.2 | 45.3 |
| Ball compression (PGA) | 100 | 99 | 98 | 97 | 96 | 97 |
| Ball initial velocity [1] (m/sec.) | 65.4 | 65.0 | 64.3 | 64.5 | 63.8 | 64.4 |
| Low temperature durability [2] | No breaks | All broke | No breaks | No breaks | All breaks | Nine broke |
| Stiffness modulus $(Kg/cm^2)$[3] | 3,700 | 3,650 | 2,000 | 3,300 | 2,700 | 3,500 |

Table 2

| Resin name (Neutralization degree) | Examples No. | | | | | | |
|---|---|---|---|---|---|---|---|
| | 1 | 2 | 3 | 4 | 5 | 6 | 7 |
| (a) EAA-Na (about 42 %) | 60 | 50 | – | – | 50 | – | 45 |
| (b) EAA-Na (about 44 %) | – | – | 40 | – | – | – | – |
| (c) EAA-Na (about 20 %) | – | – | – | – | – | – | – |
| (d) EAA-Na (about 40 %) | – | – | – | – | – | – | – |
| (e) EAA-Li (about 30 %) | – | – | – | 65 | – | 50 | – |
| (f) EAA-Zn (about 35 %) | 40 | 50 | – | 35 | – | – | – |
| (g) EAA-Zn (about 27 %) | – | – | 60 | – | – | – | 45 |
| (h) EAA-Zn (about 22 %) | – | – | – | – | – | – | – |
| (i) EAA-Mg (about 35 %) | – | – | – | – | 50 | 50 | – |
| (j) EMAA-Na (about 30 %) | – | – | – | – | – | – | – |
| (k) EMAA-Zn (about 60 %) | – | – | – | – | – | – | 10 |
| Total neutralization degree after blend (%) [4] | 39 | 38 | 34 | 31 | 38 | 32 | 37 |
| Divalent metal neutralization degree (%) [4] | 14 | 17 | 16 | 12 | 17 | 17 | 18 |
| Ball weight (g) | 45.1 | 45.1 | 45.2 | 45.2 | 45.1 | 45.2 | 45.3 |
| Ball compression (PGA) | 100 | 100 | 100 | 100 | 98 | 99 | 99 |
| Ball initial velocity [1] (m/sec.) | 65.5 | 65.4 | 65.4 | 65.5 | 65.3 | 65.4 | 65.2 |
| Durability (index)[5] | 100 | 101 | 101 | 100 | 102 | 100 | 101 |
| Low temperature durability [2] | No breaks | No breaks | No breaks | No breaks | No breaks | No breaks | No breaks |
| Flying distance (carry in yard) [6] | 223.3 | 223.5 | 222.9 | 221.8 | 222.1 | 222.7 | 222.2 |
| Stiffness modulus of cover($Kg/cm^2$)[3] | 3,800 | 3,700 | 3,750 | 3,700 | 3,600 | 3,650 | 3,600 |
| Melt index of cover resin[7] | 1.9 | 1.8 | 2.0 | 1.7 | 1.6 | 1.7 | 1.8 |

EP 0 443 706 B1

8

Table 3

| Resin name (Neutralization degree) | Comparative Examples No. | | | | | | | |
|---|---|---|---|---|---|---|---|---|
| | 1 | 2 | 3 | 4 | 5 | 6 | 7 | 8 |
| (a) EAA-Na (about 42 %) | – | 30 | 60 | – | – | – | 50 | – |
| (b) EAA-Na (about 44 %) | – | – | – | – | – | – | – | – |
| (c) EAA-Na (about 20 %) | – | – | – | 60 | – | 60 | – | 50 |
| (d) EAA-Na (about 40 %) | – | – | – | – | 60 | – | – | – |
| (e) EAA-Li (about 30 %) | – | – | – | – | – | – | – | – |
| (f) EAA-Zn (about 35 %) | – | 20 | – | – | – | – | – | – |
| (g) EAA-Zn (about 27 %) | – | – | – | – | – | – | – | – |
| (h) EAA-Zn (about 22 %) | – | – | 40 | – | 40 | 40 | – | 50 |
| (i) EAA-Mg (about 35 %) | – | – | – | 40 | – | – | – | – |
| (j) EMAA-Na (about 30 %) | 60 | 50 | – | – | – | – | – | – |
| (k) EMAA-Zn (about 60 %) | 40 | – | – | – | – | – | 50 | – |
| Total neutralization degree after blend (%) [4] | 42 | 34 | 34 | 26 | 32 | 20 | 51 | 20 |
| Divalent metal neutralization degree (%) [4] | 24 | 7 | 8 | 14 | 8 | 8 | 30 | 11 |
| Ball weight (g) | 45.2 | 45.3 | 45.4 | 45.4 | 45.4 | 45.4 | 45.4 | 45.5 |
| Ball compression (PGA) | 98 | 98 | 100 | 97 | 95 | 97 | 98 | 95 |
| Ball initial velocity [1] (m/sec.) | 64.6 | 64.8 | 65.0 | 64.8 | 64.3 | 64.8 | 64.5 | 64.9 |
| Durability (index) [5] | 102 | 100 | 102 | 101 | 103 | 100 | 97 | 101 |
| Low temperature durability [2] | No breaks | All broke | All broke | Five broke | Nine broke | All broke | No breaks | All broke |
| Flying distance (carry in yard) [6] | 216.3 | 217.9 | 218.3 | 217.5 | 214.8 | 215.7 | 216.9 | 218.7 |
| Stiffness modulus of cover $(Kg/cm^2)$ [3] | 3,400 | 3,450 | 3,500 | 3,300 | 3,450 | 3,300 | 3,450 | 3,300 |
| Melt index of cover resin [7] | 1.9 | 2.3 | 2.1 | 2.2 | 2.4 | 2.8 | 1.4 | 2.9 |

[1] Ball initial velocity: A golf ball was hit by a No.1 wood at a head speed of 45 m/s using a swing robot (available from True Temper Co., Ltd.) and its initial velocity was determined. Determination was carried 10 balls and the result is shown in an average value.

[2] Low-temperature durability: Ten golf balls were stored at -30 °C and then struck to a metal board at 45 m/s by an air gun up to 50 times. Number of the broken balls are shown in Tables.

[3] Stiffness modulus of cover: This was determined by a stiffness tester (available from Toyo Seiki Co., Ltd.). A sample for the determination was prepared by press-molding to form a plain plate and allowing to stand at 23 °C at a relative humidity of 50 % for 2 weeks.

[4] Amount of the remaining acid groups and Neutralization degree: The cover resin was dissolved in a hot tetrahydrofuran, which was titrated with potassium hydroxide with heating to determine the remaining carboxyl group (COOH). The metal content (COOM), i.e. alkali metal and divalent metal, was determined by atomic analysis. The neutralization degree was obtained from the equation;

$$\text{Neutralization degree (\%)} = \frac{[COOM]}{[COOH] + [COOM]} \times 100$$

[5] Durability a golf ball was struck to a metal board at a speed of 45 m/s and number of striking was determined until the ball was broken. The number is expressed as an index number when the number of Example 1 is made 100.

[6] Flying distance: A golf ball was hit by a No.1 wood at a head speed of 45 m/s using a swing robot (available from True Temper Co., Ltd.) and its flying distance of carry was determined. Determination was carried 10 balls and the result is shown in an average value.

[7] Melt index; JIS-K6760 at 190 °C at a load of 2160 g.

As is shown in Table 1, the sample No. 1 (a blend of (a) EAA-Na and (f) EAA-Zn) has a faster initial velocity and excellent durability in comparison with the samples Nos. 4-6 ((k) EMAA-Zn or (l) EMAA-Na). The sample No. 2 (solely using (a) EAA-Na) has a fast initial velocity, but has poor low-temperature durability. The sample No. 3 (solely using (f) EAA-Zn) has good low-temperature durability, but is poor in ball initial velocity and stiffness modulus.

Accordingly, it is apparent from the above results that the blended resin of the EAA-Na and EAA-Zn provides good physical properties and good cover materials for golf balls.

As is shown in Tables 2 and 3, the golf balls of Examples 1 to 7 in which a blend of EAA-Na and EAA-Zn or Mg was employed as a cover resin have faster initial velocity (i.e. high rebound resilience) and further flying distance, in comparison with the golf ball of Comparative Example 1 in which a conventional ionomer resin was used as a cover resin. Especially, the golf ball of Example 7 in which the cover resin contained 10 parts by weight of the conventional ethylene-methacrylic acid copolymer type ionomer resin (i.e. (l) EMAA-Zn) had faster initial velocity and excellent flying properties. The golf ball of Comparative Example 2, in which the cover contained 50 % by weight of the ethylene-methacrylic acid type ionomer resin (i.e. (k) EMAA-Na), has poor initial velocity and poor low-temperature durability. The golf ball of Comparative Example 3, although a blend resin of the two ethylene-acrylic acid type ionomer resins (i.e. (a) EAA-Na and (h) EAA-Zn) was employed as a cover resin, had poor initial velocity and poor low-temperature durability because of the lower neutralization degree of the divalent metal ions after blending. The golf ball of comparative Example 4, although a blend of resin of the two ethylene-acrylic acid type ionomer resins (i.e. (a) EAA-Na and (i) EAA-Mg) was employed as a cover resin, had poor ball initial velocity and poor low-temperature durability because of the lower total neutralization degree of blending. The golf balls of Comparative Examples 5 and 6, although a blend resin of the two ethylene-acrylic acid type ionomer resins (i.e. (d) EAA-Na and (h) EAA-Zn for Comparative Example 5 and (c) EAA-Na and (h) EAA-Zn for Comparative Example 6) was employed as a cover resin, had poor initial velocity and poor low-temperature durability because of the lower neutralization degree of the divalent metal ions after blending. The golf ball of Comparative Example 7, in which the ethylene-methacrylic acid type ionomer resins (i.e. (a) EMAA-Zn) was present in an amount of 50 % by weight, had poor initial velocity. The golf ball of Comparative Example 8, although a blend resin of the two ethylene-acrylic acid type ionomer resins (i.e. (c) EAA-Na and (h) EAA-Zn) was employed as a cover resin, had poor initial velocity and poor low-temperature durability because of the lower total neutralization degree after blending.

## Claims

1. A golf ball comprising a core and a cover covering the core, the cover having a total neutralization degree of 30 to 60%, of which at least 10% is neutralized with divalent metal ions, and being prepared by mixing

   (A) an ionomer resin having a melt index of 0.5 to 5.0 g/10 min and a stiffness modulus of 3,000 to 5,000 $Kg/cm^2$, prepared from an ethylene-acrylic acid copolymer of 16 to 25% by weight of acrylic acid and the balance of ethylene of which 20 to 70 mol % of the carboxyl groups is neutralized with alkali metal ions, and the ethylene-acrylic acid copolymer before neutralization having a melt index of 20 to 150 g/10 min, and

   (B) an ionomer resin having a melt index of 0.5 to 5.0 g/10 min and a stiffness modulus of 2,000 to 4,500 $Kg/cm^2$, prepared from an ethylene-acrylic acid copolymer of which 25 to 70 mol % of the carboxyl groups is neutralised with divalent metal ions, and the ethylene-acrylic acid copolymer before neutralization having a melt index of 20 to 150 g/10 min,

   in a weight ratio (A/B) of 70/30 to 40/60.

2. A golf ball as claimed in claim 1 wherein the alkali metal is lithium or sodium.

3. A golf ball as claimed in claim 1 or claim 2 wherein the divalent metal is zinc, copper or an alkaline earth metal.

4. A golf ball as claimed in claim 3 wherein the alkaline earth metal is magnesium or calcium.

5. A golf ball as claimed in any one of the preceding claims wherein the ionomer resin (A) has a neutralization degree of 30 to 60%.

6. A golf ball as claimed in any one of the preceding claims wherein the ionomer resin (B) has a neutralization degree of 35 to 60%.

7. A golf ball as claimed in any one of the preceding claims wherein the cover resin contains, in addition to the mixture of the ionomer resins (A) and (B), an ethylene-methacrylic type ionomer resin, polyolefin, polyester elastomer or polyamide in an amount of less than 20% by weight.

EP 0 443 706 B1

8. A golf ball as claimed in any one of the preceding claims wherein the core is either a solid core which is moulded from rubber, or a thread-wound core which is prepared by winding rubber thread onto a centre.

**Patentansprüche**

1. Golfball, umfassend einen Kern und eine den Kern bedeckende Hülle, wobei die Hülle einen gesamten Neutralisationgrad von 30 bis 60 % besitzt, von dem mindestens 10 % mit zweiwertigen Metallionen neutralisiert sind, und wobei sie hergestellt ist durch Vermischen

(A) eines Ionomerharzes mit einem Schmelzindex von 0.5 bis 5.0 g/10 min und einem Steifheitsmodul von 3000 bis 5000 kg/cm$^2$, hergestellt aus einem Ethylen-Acrylsäure-Copolymer aus 16 bis 25 Gew.-% Acrylsäure und als Rest Ethylen, von dem 20 bis 70 mol % der Carboxylgruppen mit Alkalimetallionen neutralisiert sind und das Ethylen-Acrylsäure-Copolymer vor der Neutralisation einen Schmelzindex von 20 bis 150 g/10 min aufweist, und

(B) eines Ionomerharzes mit einem Schmelzindex von 0.5 bis 5.0 g/10 min und einem Steifheitsmodul von 2000 bis 4500 kg/cm$^2$, hergestellt aus einem Ethylen-Acrylsäure-Copolymer, von dem 25 bis 70 mol % der Carboxylgruppen mit zweiwertigen Metallionen neutralisiert sind und das Ethylen-Acrylsäure-Copolymer vor der Neutralisation einen Schmelzindex von 20 bis 150 g/10 min aufweist, in einem Gewichtsverhältnis (A/B) von 70/30 bis 40/60.

2. Golfball nach Anspruch 1, wobei das Alkalimetall Lithium oder Natrium ist.

3. Golfball nach Anspruch 1 oder Anspruch 2, wobei das zweiwertige Metall Zink, Kupfer oder ein Erdalkalimetall ist.

4. Golfball nach Anspruch 3, wobei das Erdalkalimetall Magnesium oder Kalzium ist.

5. Golfball nach einem der vorangehenden Ansprüche, wobei das Ionomerharz (A) einen Neutralisationsgrad von 30 bis 60 % besitzt.

6. Golfball nach einem der vorangehenden Ansprüche, wobei das Ionomerharz (B) einen Neutralisationsgrad von 35 bis 60 % besitzt.

7. Golfball nach einem der vorangehenden Ansprüche, wobei das Harz der Hülle zusätzlich zu dem Gemisch der Ionomerharze (A) und (B) ein Ionomerharz vom Ethylen-Methacrylsäure-Typ, ein Polyolefin, ein Polyesterelastomer oder Polyamid in einer Menge von weniger als 20 Gew.-% enthält.

8. Golfball nach einem der vorangehenden Ansprüche, wobei der Kern entweder ein fester Kern, der aus Gummi geformt ist, oder ein gewickelter Kern ist, der durch Aufwickeln eines Gummifadens auf ein Kernstück hergestellt ist.

**Revendications**

1. Balle de golf comprenant un coeur et un revêtement recouvrant le coeur, le revêtement possédant un degré total de neutralisation compris entre 30 et 60 %, dont au moins 10 % sont neutralisés avec des ions de type métal divalent, et étant préparé en mélangeant

(A) une résine ionomère ayant un indice de fusion compris entre 0,5 et 5,0 g/10 min et un module de rigidité compris entre 3 000 et 5 000 kg/cm$^2$, préparée à partir d'un copolymère d'éthylène et d'acide acrylique constitué de 16 à 25 % en masse d'acide acrylique et du reste d'éthylène dont 20 à 70 % en mole des groupements carboxyle sont neutralisés par des ions de type métal alcalin, le copolymère d'éthylène et d'acide acrylique avant neutralisation ayant un indice de fusion compris entre 20 et 150 g/10 min, et

(B) une résine ionomère ayant un indice de fusion compris entre 0,5 et 5,0 g/10 min et un module de rigidité compris entre 2 000 et 4 500 kg/cm$^2$, préparée à partir d'un copolymère d'éthylène et d'acide acrylique dont 25 à 70 % en mole des groupements carboxyle sont neutralisés avec des ions de type métal divalent, le copolymère d'éthylène et d'acide acrylique avant neutralisation ayant un indice de fusion compris entre 20 et 150 g/10 min, en un rapport massique (A/B) compris entre 70/30 et 40/60.

12

2. Balle de golf selon la revendication 1, dans laquelle le métal alcalin est le lithium ou le sodium.

3. Balle de golf selon la revendication 1 ou la revendication 2, dans laquelle le métal divalent est le zinc, le cuivre ou un métal alcalino-terreux.

4. Balle de golf selon la revendication 3, dans laquelle le métal alcalino-terreux est le magnésium ou le calcium.

5. Balle de golf selon l'une quelconque des revendications précédentes, dans laquelle la résine ionomère (A) possède un degré de neutralisation compris entre 30 et 60 %.

6. Balle de golf selon l'une quelconque des revendications précédentes, dans laquelle la résine ionomère (B) possède un degré de neutralisation compris entre 35 et 60 %.

7. Balle de golf selon l'une quelconque des revendications précédentes, dans laquelle la résine du revêtement contient, outre le mélange des résines ionomères (A) et (B), une résine ionomère de type éthylène-méthacrylique, une polyoléfine, un élastomère de polyester ou un polyamide en une quantité inférieure à 20 % en masse.

8. Balle de golf selon l'une quelconque des revendications précédentes, dans laquelle le coeur est soit un coeur solide qui est moulé à partir de caoutchouc, soit un coeur à fil enroulé qui est préparé en enroulant du fil en tissu élastique sur un centre.